Europäisches Patentamt

European Patent Office

Office européen des brevets

(11) Veröffentlichungsnummer: **0 399 270**
**A1**

## (12) EUROPÄISCHE PATENTANMELDUNG

(21) Anmeldenummer: **90108532.4**

(22) Anmeldetag: **07.05.90**

(51) Int. Cl.⁵: **C09K 7/02**

(30) Priorität: **20.05.89 DE 3916550**

(43) Veröffentlichungstag der Anmeldung:
**28.11.90 Patentblatt 90/48**

(84) Benannte Vertragsstaaten:
**GR**

(71) Anmelder: **Henkel Kommanditgesellschaft auf Aktien**
**Postfach 1100 Henkelstrasse 67**
**D-4000 Düsseldorf 1(DE)**

(72) Erfinder: **Müller, Heinz**
**Goldregenweg 4**
**D-4019 Monheim(DE)**
Erfinder: **Herold, Claus-Peter, Dr.**
**Ostpreussenstrasse 26**
**D-4020 Mettmann(DE)**
Erfinder: **von Tapavicza, Stephan, Dr.**
**Thomas-Mann-Strasse 12**
**D-4006 Erkrath 2(DE)**
Erfinder: **Stoll, Gerhard, Dr.**
**Danziger Strasse 69**
**D-4052 Korschenbroich 1(DE)**
Erfinder: **Jeschke, Rainer, Dr.**
**Am Broichgraben 52**
**D-4000 Düsseldorf 13(DE)**
Erfinder: **Fues, Johann-Friedrich, Dr.**
**Herzogstrasse 15**
**D-4048 Grevenbroich 5(DE)**

(54) Verwendung ausgewählter oleophiler Ether in Wasser-basierten Bohrspülungen vom O/W-Emulsionstyp sowie entsprechende Bohrspülflüssigkeiten mit verbesserter ökologischer Verträglichkeit.

(57) Beschrieben wird die Verwendung von wenigstens weitgehend wasserunlöslichen, bei Arbeitstemperatur flüssigen und/oder wenigstens plastisch verformbaren und Flammpunkte von wenigstens 80 °C aufweisenden Ethern ein-und/oder mehrfunktioneller Alkohole natürlichen und/oder synthetischen Ursprungs oder entsprechenden Lösungen solcher Ether in ökologisch verträglichen wasserunlöslichen Ölen als disperse Ölphase von Wasser-basierten O/W-Emulsions-Bohrspülungen, die für eine umweltschonende Erschließung geologischer Formationen geeignet sind und dabei gewünschtenfalls unlösliche, feinteilige Beschwerungsmittel zur Ausbildung von Wasser-basierten O/W-Emulsionsbohrschlämmen und/oder weitere Zusatzstoffe wie Emulgatoren, Fluid-Loss-Additive, Netzmittel, Alkalireserven und/oder Hilfsstoffe zur Inhibierung erbohrten Gesteins erhöhter Wasserempfindlichkeit enthalten.

**Verwendung ausgewählter oleophiler Ether in Wasser-basierten Bohrspülungen vom O/W-Emulsionstyp sowie entsprechende Bohrspülflüssigkeiten mit verbesserter ökologischer Verträglichkeit**

Die Erfindung beschreibt neue Bohrspülflüssigkeiten auf Basis Wasser-basierter O/W-Emulsionen und darauf aufgebaute O/W-Emulsionsbohrspülschlämme, die sich durch hohe ökologische Verträglichkeit bei gleichzeitig guten Stand- und Gebrauchseigenschaften auszeichnen. Ein wichtiges Einsatzgebiet für die neuen Bohrspülsysteme sind off-shore-Bohrungen zur Erschließung von Erdöl- und/oder Erdgasvorkommen, wobei es hier die Erfindung insbesondere darauf abstellt, technisch brauchbare Bohrspülungen mit hoher ökologischer Verträglichkeit zur Verfügung zu stellen. Der Einsatz der neuen Bohrspülsysteme hat zwar besondere Bedeutung im marinen Bereich, ist aber nicht darauf beschränkt. Die neuen Spülsysteme können ganz allgemeine Verwendung auch bei landgestützten Bohrungen finden, also auch hier zur Erschließung von Erdöl-und/oder Erdgasvorkommen dienen. Sie sind aber neue wertvolle Arbeitsmittel beispielsweise auch beim Geothermiebohren, beim Wasserbohren bei der Durchführung geowissenschaftlicher Bohrungen und bei Bohrungen im Bergbaubereich. Grundsätzlich gilt, daß durch die erfindungsgemäß ausgewählten, neuen Wasser-basierten O/W-Bohrspülflüssigkeiten der öko-toxische Problembereich substantiell vereinfacht wird.

## Zum Stand der Technik

Flüssige Spülsysteme zur Niederbringung von Gesteinsbohrungen unter Aufbringen des abgelösten Bohrkleins sind bekanntlich beschränkt eingedickte, fließfähige Systeme, die einer der drei folgenden Klassen zugeordnet werden können:
Rein-wäßrige Bohrspülflüssigkeiten, Bohrspülsysteme auf Ölbasis, die in der Regel als sogenannte Invert-Emulsionsschlämme eingesetzt werden und Zubereitungen vom Typ der W/O-Emulsionen darstellen, bei denen die wäßrige Phase heterogen fein-dispers in der geschlossenen Ölphase verteilt ist. Die dritte Klasse der bekannten Bohrspülflüssigkeiten ist auf Wasser-basierten O/W-Emulsionen aufgebaut, d.h. auf Flüssigsystemen, die in einer geschlossenen wäßrigen Phase eine heterogene, feindisperse Ölphase enthalten. Die Erfindung beschreibt verbesserte Systeme dieser zuletzt genannten Art.

Bohrspülflüssigkeiten solcher O/W-Emulsionssysteme nehmen in ihren Gebrauchseigenschaften eine Zwischenstellung ein zwischen den rein wäßrigen Systemen und den Öl-basierten Invert-Spülungen. Die Vorteile aber auch Nachteile rein wäßriger Systeme verbinden sich mit den Vor- und Nachteilen der bis heute beschriebenen Öl-basierten Invert-Emulsionen. Ausführliche Sachinformationen finden sich in der einschlägigen Fachliteratur, verwiesen sei beispielsweise auf das Fachbuch George R. Gray und H.C.H. Darley, "Composition in Properties of Oil Well Drilling Fluids", 4. Auflage, 1980/81, Gulf Publishing Company, Houston, und die umfangreiche, darin zitierte Sach- und Patentliteratur sowie auf das Handbuch "Applied Drilling Engineering", Adam T. Bourgoyne, Jr. et al., First Printing Society of Petroleum Engineers, Richardson, Texas (USA).

Eine der Hauptschwächen rein Wasser-basierter Bohrspülsysteme liegt in der Interaktion wasserempfindlicher, insbesondere wasserquellbarer Gesteins- und/oder Salzformationen mit der waßrigen Bohrspülflüssigkeit und den dadurch ausgelösten Sekundärfolgen, insbesondere Bohrlochinstabilität und Eindickung der Bohrspülung. Zahlreiche Vorschläge beschäftigen sich mit der Einschränkung dieses Problemkreises und haben beispielsweise zur Entwicklung der sogenannten Inhibitive Water-Base Muds geführt, vergl. beispielsweise "Applied Drilling Engineering", aao, Kapitel 2, Drilling Fluids, 2.4 sowie Gray und Darley aao, Kapitel 2, insbesondere die Unterkapitel auf den Seiten 50 bis 62 (Muds for "Heaving Shale", Muds for Deep Holes, Non-Dispersed Polymer Muds, Inhibited Muds: Potassium Compounds).

In der jüngeren Praxis haben sich insbesondere Bohrspülungen auf Ölbasis zur Bewältigung der geschilderten Schwierigkeiten durchgesetzt, die aus dem 3-Phasensystem Öl, Wasser und feinteilige Feststoffe bestehen und Zubereitungen vom Typ der W/O-Emulsionen sind. Öl-basierte Bohrspülungen waren ursprünglich auf Dieselölfraktionen mit einem Gehalt an Aromaten aufgebaut. Zur Entgiftung und Verminderung der damit geschaffenen ökologischen Problematik ist dann vorgeschlagen worden, weitgehend aromatenfreie Kohlenwasserstofffraktionen - heute auch als "Non-Polluting Oils" bezeichnet - als geschlossene Ölphase einzusetzen, siehe hierzu beispielsweise die Veröffentlichungen E.A. Boyd et al. "New Base Oil Used in Low Toxicity Oil Muds", Journal of Petroleum Technology, 1985, 137 -143 sowie R.B. Bennet "New Drilling Fluid Technology - Mineral Oil Mud", Journal of Petroleum Technology, 1984, 975 - 981 sowie die darin zitierte Literatur.

Auch die Bohrspülflüssigkeiten vom Typ der Wasser-basierten O/W-Emulsionssysteme benutzen bis heute reine Kohlenwasserstofföle als dipserse Ölphase, vergl. hierzu beispielsweise Gray, Darley aao., S. 51/52 unter Kapitel "Oil Emulsion Muds" sowie die tabellarische Zusammenstellung auf S. 25 (Table 1-3) mit den Angaben zu Wasser-basierten Emulsionsspülungen vom Typ der Salt Water Muds, Lime Muds, Gyp Muds, und CL-CLS-Muds.

Bekannt ist in diesem Zusammenhang insbesondere, daß Wasser-basierte O/W-Emulsionsspülungen eine substantielle Verbesserung der rein Wasser-basierten Bohrspülsysteme in vielfacher Hinsicht bedeuten. Gerade in jüngster Zeit werden aber auch kritisch die Vor-und Nachteile solcher Wasser-basierter Emulsionsspülungen im Vergleich mit den Öl-basierten Invert-Systemen verglichen. Anlaß hierfür sind die beträchtlichen ökologischen Bedenken, die heute gegen die zur Zeit gebräuchlichen, Öl-basierten Invert-Spülungen bestehen.

Diese ökologischen Bedenken lassen sich in zwei Problembereiche unterteilen:

Alle Bohrspülsysteme auf Wasser- und/oder Ölbasis benötigen neben den Grundbestandteilen Öl und Wasser eine Mehrzahl von Zusatzstoffen zur Einstellung der gewünschten Gebrauchseigenschaften. Genannt seien hier lediglich beispielhaft Emulgatoren bzw. Emulgatorsysteme Beschwerungsmittel, Fluid-Loss-Additive, Netzmittel, Alkalireserven, Viskositätsregler, gegebenenfalls Hilfsstoffe zur Inhibierung erbohrten Gesteins erhöhter Wasserempfindlichkeit, Biocide und dergleichen. Eine ausführliche Zusammenstellung befindet sich beispielsweise in Gray und Darley, aao., Kapitel 11, "Drilling Fluid Components". Die Praxis hat dabei aus heutiger Sicht ökologisch unbedenkliche Zusatzstoffe, aber auch ökologisch bedenkliche oder gar ökologisch unerwünschte Zusatzstoffe entwikkelt.

Der zweite Problemkreis wird durch die im Rahmen solcher Bohrspülungen eingesetzten Ölphasen bestimmt. Auch die heute als "Non-Polluting Oils" bezeichneten, weitgehend aromatenfreien Kohlenwasserstofffraktionen sind bei ihrer Freigabe in die Umwelt nicht unbedenklich. Eine weitere Minderung der Umweltproblematik - ausgelöst durch die flüssigen Ölphasen der hier betroffenen Art - erscheint dringend erforderlich. Gültigkeit hat das insbesondere beim Niederbringen von Off-Shore-Bohrungen, beispielsweise zur Erschließung von Erdöl- bzw. Erdgas-Vorkommen, weil das marine Ökosystem besonders empfindlich auf das Einbringen von toxischen und schwer abbaubaren Substanzen reagiert.

Aus jüngerer Zeit bestehen einige Vorschläge zur Minderung dieser zuletzt genannten Problematik. So beschreiben die US-Patentschriften 4,374,737 und 4,481,121 Öl-basierte Invert-Bohrspülflüssigkeiten, in denen Non-Polluting Oils Verwendung finden sollen. Als Non-Polluting Oils werden nebeneinander und gleichwertig aromatenfreie Mineralölfraktionen und Pflanzenöle von der Art Erdnußöl, Sojabohnenöl, Leinsamenöl, Maisöl, Reisöl oder auch Öle tierischen Ursprungs wie Walöl genannt. Durchweg handelt es sich bei den hier genannten Esterölen pflanzlichen und tierischen Ursprungs um Triglyceride natürlicher Fettsäuren, die bekanntlich eine hohe Umweltverträglichkeit besitzen und gegenüber Kohlenwasserstofffraktionen - auch wenn diese aromatenfrei sind - aus ökologischen Überlegungen deutliche Überlegenheit besitzen.

In den genannten US-Patentschriften beschreibt dann allerdings kein konkretes Beispiel die Verwendung solcher natürlicher Esteröle in Invert-Bohrspülungen. Durchweg werden Mineralölfraktionen als geschlossene Ölphase eingesetzt. Tatsächlich kommen Öle pflanzlichen und/oder tierischen Ursprungs der genannten Art für Invert-Bohrspülungen aus praktischen Gründen nicht in Betracht. Die rheologischen Eigenschaften solcher Ölphasen sind für den breiten, in der Praxis geforderten Temperaturbereich von 0 bis 5 °C einerseits, sowie bis zu 250 °C und darüber andererseits nicht in den Griff zu bekommen.


Die älteren Vorschläge der Anmelderin

Eine Reihe älterer Anmeldungen der Anmelderin schildert die Verwendung von biologisch leicht abbaubaren und ökologisch unbedenklichen Esterölen als geschlossene Ölphase in W/O-Invert-Bohrspülsystemen. Verwiesen wird insbesondere auf die älteren Anmeldungen P 38 42 659.5 und P 38 42 703.6 (D 8523 und D 8524) sowie die Abwandlungen brauchbarer Esteröle gemäß den Angaben der älteren Patentanmeldungen P 39 07 391.2 und P 39 07 392.0 (D 8606 und D 8607).

Gegenstand dieser älteren Anmeldungen ist die Verwendung von Esterölen auf Basis jeweils ausgewählter Monocarbonsäuren bzw. Monocarbonsäuregemische und monofunktioneller und gegebenenfalls mehrfunktioneller Alkohole als geschlossene Ölphase in W/O-Invert-Systemen. Die älteren Anmeldungen schildern, daß mit den dort offenbarten Estern bzw. Estergemischen nicht nur in der frischen Bohrspülung befriedigende rheologische Eigenschaften eingestellt werden können, sondern daß es auch gelingt, unter Mitverwendung ausgewählter, bekannter Alkalireserven in der Bohrspülung zu arbeiten ohne daß damit unerwünschte Verdickungen bei einer partiellen Esterhydrolyse zu befürchten sind.

Eine wichtige Weiterentwicklung solcher Invert-Bohrspülungen auf Esterölbasis ist Gegenstand der älteren Anmeldung P 39 03 785.1 (D 8543) der Anmelderin.

Die Lehre dieser älteren Anmeldung geht von dem Konzept aus, in Invert-Bohrspülungen auf Basis von Esterölen ein zusätzliches Additiv mitzuverwenden, das geeignet ist, die erwünschten rheologischen Daten der Bohrspülung im geforderten Bereich auch dann zu halten, wenn im Gebrauch zunehmen größere Mengen an freien Carbonsäuren durch partielle Esterhydrolyse gebildet werden. Vorgesehen ist die Mitverwendung von basischen und zur Salzbildung mit Carbonsäuren befähigten Aminverbindungen ausgeprägt oleophiler Natur und höchstens beschränkter Wasserlöslichkeit als Additiv in der Ölphase.

Eine modifizierte Form solcher W/O-Invert-Bohrspülsysteme wird in der älteren Anmeldung P 39 11 238.1 (D 8511) der Anmelderin beschrieben. Beschrieben wird hier die Verwendung von

a) wenigstens weitgehend wasserunlöslichen und im Temperaturbereich von 0 bis 5 $^{\circ}$C fließ- und pumpfähigen ein- und/oder mehrfunktionellen Alkoholen natürlichen und/oder synthetischen Ursprungs oder von

b) im angegebenen Temperaturbereich fließ- und pumpfähigen Lösungen von wenigstens weitgehend wasserunlöslichen ein- und/oder mehrfunktionellen Alkoholen natürlichen und/oder synthetischen Ursprungs in ökologisch verträglichen wasserunlöslichen Ölen als geschlossene Ölphase von Bohrspülungen, die als W/O-Emulsion vorliegen, in der alkoholhaltigen Ölphase eine disperse wäßrige Phase sowie gewünschtenfalls weitere übliche Zusatzstoffe aufweisen. Zur Abmischung mit den wasserunlöslichen Alkoholen sind als ökologisch verträgliche, wasserunlösliche Öle wenigstens anteilsweise Esteröle vorgesehen, wie sie in den zuvor genannten älteren Anmeldungen der Anmelderin beschrieben sind.

Beschrieben wird schließlich in der älteren Anmeldung P 39 11 299.3 (D 8539) der Anmelderin die Verwendung von wasserunlöslichen und Flammpunkte oberhalb 80 $^{\circ}$C aufweisenden Ethern einwertiger Alkohole natürlichen und/oder synthetischen Ursprungs mit wenigstens 4 C-Atomen, vorzugsweise wenigstens 6 C-Atomen in den Alkohol-Resten als Ölphase oder Bestandteil der Ölphase solcher Invert-Bohrspülungen, die als W/O-Emulsion vorliegen. Auch hier ist die Mitverwendung der zuvor genannten Esteröle zur Abmischung mit den Ethern vorgesehen.

## Die Aufgabe der Erfindung und ihre technische Lösung

Die vorliegende Erfindung geht von der Aufgabe aus, Bohrspülsysteme höchster und in dieser Form bisher unbekannter ökologischer Verträglichkeit zu schaffen, die gleichzeitig gute Gebrauchseigenschaften aufweisen und eine befriedigende Verwendung insbesondere auch in Problemgebieten ermöglichen. Die Erfindung will dabei bewußt den Typ der Öl-basierten Invert-Bohrspülsysteme verlassen und zum Typ der Öl-modifizierten Wasser-basierten O/W-Emulsionssysteme zurückkehren. Dabei sollen aber die in den genannten älteren Anmeldungen der Anmelderin beschriebenen Hilfsmittel und die damit verbundenen ökologischen Vorteile nun auch in dieser Klasse von Bohrspülsystemen Verwendung finden.

Die Erfindung will damit in einer ersten Ausführungsform die Vorteile von O/W-Emulsionsspülsystemen gegenüber den reinen, Wasserbasierten Bohrspülungen ausnutzen, gleichzeitig aber die Mineralölphase wenigstens zu einem substantiellen Anteil - vollständig oder anteilsweise - durch ökologisch unbedenkliche Ether ausgeprägt oleophilen Charakters austauschen.

In einem weiteren Ansatz will die Erfindung auch den zweiten Problemkreis der Zusatz- und Hilfsstoffe in Bohrspülungen dadurch ökologisch entschärfen, daß aus dem großen Bereich der hier bekannten Zusatzstoffe wenigstens überwiegend und vorzugsweise durchgängig solche Hilfsstoffe gewählt werden, die sich durch ökologische Unbedenklichkeit auszeichnen.

Gegenstand der Erfindung ist dementsprechend in einer ersten Ausführungsform die Verwendung von wenigstens weitgehend wasserunlöslichen, bei Arbeitstemperatur flüssigen und/oder wenigstens plastisch verformbaren und Flammpunkte von wenigstens 80 $^{\circ}$C aufweisenden Ethern ein- und/oder mehrfunktioneller Alkohole natürlichen und/oder synthetischen Ursprungs oder entsprechenden Lösungen solcher Ether in ökologisch verträglichen wasserunlöslichen Ölen als disperse Ölphase von Wasser-basierten O/W-Emulsions-Bohrspülungen, die für eine umweltschonende Erschließung geologischer Formationen geeignet sind und dabei gewünschtenfalls unlösliche, feinteilige Beschwerungsmittel zur Ausbildung von Wasser-basierten O/W-Emulsionsbohrschlämmen und/oder weitere Zusatzstoffe wie Emulgatoren, Fluid-Loss-Additive, Netzmittel, Alkalireserven und/oder Hilfsstoffe zur Inhibierung erbohrten Gesteins erhöhter Wasserempfindlichkeit enthalten.

In einer weiteren Ausführungsform betrifft die Erfindung Wasserbasierte O/W-Emulsions-Bohrspülflüssigkeiten, die in einer homogenen wäßrigen Phase eine stabil-disperse Ölphase in Mengen von etwa 5 bis 50 Gew.-% - Gew.-% bezogen auf die Summe der unbeschwerten Wasser- und Ölphase - gewünschtenfalls zusammen mit gelösten und/oder dispergierten Hilfsstoffen wie Emulgatoren, Fluid-Loss-Additiven, Netzmitteln, feinteiligen Beschwerungsstoffen, Salzen, Alkalireserven und/oder Biociden enthalten und dadurch gekennzeichnet sind, daß ein wenigstens substantieller Anteil der dispersen Ölphase durch wasserdispergierbare, bei Arbeitstemperatur flüssige oder wenigstens plastisch verformbare und Flammpunkte von wenigstens 80 °C aufweisende Ether von ein-und/oder mehrfunktionellen Alkoholen natürlichen und/oder synthetischen Ursprungs oder entsprechende Lösungen solcher Ether in ökologisch verträglichen, wasserunlöslichen Ölen, insbesondere oleophilen, ein- und/oder mehrwertigen Alkoholen und/oder entsprechenden Esterölen, gebildet ist.

Für beide Ausführungsformen der erfindungsgemäßen Lehre gilt die zusätzliche bevorzugte Maßnahme, daß wenigstens überwiegend solche anorganischen und/oder organischen Hilfs- und Zuschlagsstoffe für Wasser-basierte Emulsions-Bohrspülungen bzw. Emulsions-Bohrschlämme mitverwendet werden, die ökologisch und toxikologisch wenigstens weitgehend unbedenklich sind. So wird also in den wichtigsten Ausführungsformen der Erfindung beispielsweise auf den Einsatz von Hilfsmitteln auf Basis löslicher toxischer Schwermetallverbindungen verzichtet.

## Die bevorzugten Ausführungsformen der Erfindung

Die Mischungsverhältnisse der Ether-Öl-/Wasser-Phasen überstreichen den üblichen Bereich für bisher bekannte O/W-Emulsionsbohrspülungen auf Mineralöl-Basis. Die unteren Grenzwerte für die Ölphase liegen üblicherweise bei wenigstens etwa 5 Gew.-% oder bevorzugt zwischen etwa 5 und 10 Gew.-%, beispielsweise also bei 7 oder 8 Gew.-% -Gew.-% jeweils bezogen auf das Gesamtgewicht der Flüssigphasen Öl + Wasser jeweils im unbeschwerten Zustand. Mindestmengen in der angegebenen Größenordnung stellen sicher, daß von den Typ-charakteristischen Eigenarten einer O/W-Emulsionsspülung Gebrauch gemacht werden kann. Der obere Grenzwert für den Gehalt an Öl liegt üblicherweise bei etwa 50 Gew.-% oder auch noch geringfügig darüber, beispielsweise bei maximal etwa 65 Gew.-%. Unter der Annahme einer hinreichend gleichmäßigen Tröpfchengröße der dispersen Ölphase ist damit dann allerdings schon der Bereich der dichtesten Packung erreicht, so daß der Übergang in den Spülungstyp der W/O-Invertspülungen naheliegt bzw. sinnvoll erscheint.

Die Obergrenze des Gehalts an disperser Ölphase in den erfindungsgemäßen O/W-Spülungen wird im allgemeinen durch Kosten-/Nutzenüberlegungen bestimmt werden und liegt beispielsweise bei etwa 45 Gew.-%, vorzugsweise darunter, z. B. bei etwa 40 Gew.-%.

Eine Ethermenge im Bereich von etwa 10 bis 40 Gew.-% - Gew.-% wie zuvor berechnet - und insbesondere Mengen der Etherphase im Bereich von etwa 15 bis 35 Gew.-% ergibt die Möglichkeit, zahlreiche - bekannte und bisher nicht beschriebene - Vorteile solcher Emulsionsspülungen zu verwerten. Ölgehalte von beispielsweise 20 oder äußerstenfalls 30 Gew.-% schaffen die Basis für hochwertige Bohrspülflüssigkeiten, die in ihrer Funktion den Öl-basierten Invert-Spülungen zumindest sehr nahe kommen, gleichwohl aber sehr viel weniger an Etherphase benötigen.

## Die verschiedenen Ausführungsformen der Erfindung

In einer ersten Ausführungsform wird die disperse Ölphase der Wasser-basierten O/W-Bohrspülungen ausschließlich oder weitaus überwiegend durch die im wesentlichen wasserunlöslichen und vorzugsweise ausgeprägt oleophilen Ether gebildet. Die Rheologie der eingesetzten Ether wird dabei den technischen Anforderungen der Bohrspülungen angepaßt sein, leichte rheologische Korrekturen sind durch Mitverwendungen der in dieser Ausführungsform vorgesehenen geringen Mengen an Verdünnungsmitteln möglich. In Betracht kommen im hier geschilderten Fall insbesondere disperse Ölphasen, die zu mehr als 70 Gew.-%, vorzugsweise zu mehr als 80 Gew.-% und gewünschtenfalls ausschließlich durch die Ether als solche gebildet sind.

Die in dieser Ausführungsform in geringen Mengen gegebenenfalls mitverwendeten Öl-Mischungskomponenten können reine, insbesondere aromatenfreie Kohlenwasserstoffverbindungen, insbesondere aber ausgewählte Esteröle und/oder oleophile Alkohole der in den genannten älteren Anmeldungen der Anmelderin geschilderten Art sein. Auf diese Ausführungsform wird im nachfolgenden noch ausführlich eingegangen.

Eine zweite Ausführungsform der Erfindung betrifft den Einsatz von dispersen Ölphasen in Systemen der hier betroffenen Art, die beträchtliche oder gar überwiegende Mengen an nicht-wassermischbaren Ölen aufweisen, die mit den oleophilen Ethern nicht identisch sind, jedoch mit ihnen in Abmischung vorliegen.

Der Gehalt an erfindungsgemäß ausgwählten Ethern liegt in dieser Ausführungsform in der dispersen Ölphase im Bereich von wenigstens etwa 10 Gew.-% bis etwa 70 Gew.-% - jeweils bezogen auf die flüssige Ölphase - wobei Etheranteile in Mengen von wenigstens etwa 35 Gew.-% und vorzugsweise wenigstens etwa 50 Gew.-% der Ölphase bevorzugt sein können. Bevorzugte Mischungskomponenten auch dieser zweiten Ausführungsform sind ökologisch unbedenkliche Esteröle der im nachfolgenden noch im einzelnen geschilderten Art. Die Mitverwendung von reinen Kohlenwasserstoffölen ist allerdings nicht ausgeschlossen.

Die erfindungsgemäß eingesetzten Ether ausgeprägt oleophilen Charakters

Die Verwendung der Ether als Ölphase, aber auch ihre Mitverwendung als mengenmäßig untergeordneter oder übergeordneter Anteil in der Ölphase fordert die hinreichende Wasserunlöslichkeit dieser Ether. Bevorzugt liegt bei Raumtemperatur die Wasserlöslichkeit geeigneter Ether unter 1 Gew.-% und bevorzugt bei nicht mehr als etwa 0,5 Gew.-%.

Zur chemischen Beschaffenheit gelten die nachfolgenden allgemeinen Gesetzmäßigkeiten: Es sind Ether monofunktioneller und/oder mehrfunktioneller Alkohole geeignet. Insbesondere kommen in Betracht neben den Ethern monofunktioneller Alkohole solche von difunktionellen und monofunktionellen Alkoholen. Die Alkohole selber sollen ökologisch verträglich sein und besitzen dementsprechend in der bevorzugten Ausführungform keine aromatischen Bestandteile. Geradkettige und/oder verzweigte aliphatische oder auch entsprechende ungesättigte, insbesondere ein- und/oder mehrfach olefinisch ungesättigte Alkohole sind die bevorzugten Ether-bildenden Verbindungen. Cycloaliphatische Alkohole bzw. Ether können in Betracht gezogen werden.

Ein wichtiges allgemeines Erfordernis ist im Sinne des erfindungsgemäßen Handelns, daß diese Alkohole bzw. Ether als solche nicht nur ökologisch verträglich sind, sondern auch keine sonstigen toxikologischen, insbesondere keine inhalations-toxikologischen Gefährdungen auslösen.

Aus dem an sich breiten Bereich geeigneter Ether, bevorzugt wenigstens anteilsweise auf Basis ausgeprägt oleophiler Alkohole, kommen insbesondere Ether von Alkoholen mit geradkettiger und/oder verzweigter Kohlenwasserstoffstruktur in Betracht. Im Rahmen entsprechender monofunktioneller Alkohole sind entsprechende Verbindungen mit wenigstens 5, vorzugsweise wenigstens 6 oder 7 C-Atomen geeignete Verbindungen, wobei besonders brauchbare entsprechende Alkohole mit wenigstens 8 C-Atomen im Molekül sind. Die Obergrenze der Kohlenstoffzahl wird durch die technische Zugänglichkeit bestimmt und liegt beispielsweise im Bereich von etwa 36, vorzugsweise bei etwa 20 bis 24. Die Ether bildenden Alkohole selber können dabei geradkettig und/oder verzweigt sein, sie können aliphatisch gesättigt oder auch ein- und/oder mehrfach olefinisch ungesättigt sein.

Grundsätzlich sind Ether aus Alkoholen natürlichen und/oder synthetischen Ursprungs geeignet. Insbesondere Synthesealkohole des hier besonders interessierenden Bereichs von etwa $C_{8-24}$, die auch ungesättigte Anteile enthalten können, sind häufig preiswerte Komponenten des Marktes und für die Zwecke der Erfindung verwertbar.

Die Ether selber sollen dabei Flammpunkte von wenigstens 80 °C, vorzugsweise von wenigstens 100 °C und insbesondere von wenigstens 120 °C aufweisen. Neben den genannten Ethern auf Basis von monofunktionellen Alkoholen mit bevorzugt wenigstens 8 C-Atomen kommen hier auch Ether ausgewählter Polyole in Betracht. Für die Ether-Bildung geeignete Polyole sind insbesondere niedere Diole wie Ethylenglycol und/oder die Propylenglycole, aber auch gegebenenfalls verzweigtkettige Diole mit einem höheren oleophilen Kohlenwasserstoffrest im Molekül. Geeignet sind beispielsweise oleophile Diole mit Hydroxylgruppen in alpha,omega-Stellung und/oder längerkettige Diole, die ihre Hydroxylgruppen an benachbarten Kohlenstoffatomen aufweisen. Charakteristische Beispiele für Verbindungen dieser Art sind etwa das 2,2-Dimethyl-1,3-propandiol (Neopentylglycol) oder die Verseifungsprodukte von epoxydierten Olefinen.

Die Mischungskomponenten in der dispersen Ölphase

Zur Abmischung im Rahmen der Erfindung geeignete Ölkomponenten sind die in der heutigen Praxis der Bohrspülungen eingesetzten Mineralöle und dabei bevorzugt im wesentlichen aromatenfreie aliphatische und/oder cycloaliphatische Kohlenwasserstofffraktionen. Auf den einschlägigen druckschriftlichen Stand der Technik und die auf dem Markt befindlichen Handelsprodukte wird verwiesen.

Besonders wichtige Mischungskomponenten sind allerdings im Sinne des erfindungsgemäßen Handelns umweltverträgliche oleophile Alkohole und/oder Esteröle, wobei hier zunächst die folgenden allgemeinen Überlegungen gelten:

Die Alkohole bzw. Esteröle sollten bei Umgebungstemperatur, aber auch unter Einsatzbedingungen fließfähig sein, wobei der Bereich der Fließfähigkeit allerdings auch solche Materialien umfaßt, die bei Umgebungstemperatur wenigstens plastisch verformbar sind und bei den üblicherweise erhöhten Arbeitstemperaturen fließfähig erweichen. Aus Gründen der erleichterten Verarbeitbarkeit in der Praxis werden Alkohole und Esteröle bevorzugt, deren Erstarrungswerte (Fließ- und Stockpunkt) unterhalb 10 °C und zweckmäßigerweise unterhalb 0 °C liegen. Besonders geeignet können entsprechende Verbindungen mit Erstarrungswerten nicht über -5 °C sein. Zu berücksichtigen ist hier die Tatsache, daß die Bohrspülungen üblicherweise vor Ort unter Einsatz von beispielsweise Seewasser bei vergleichsweise niedrigen Wassertemperaturen hergestellt werden.

Aus Gründen der Betriebssicherheit ist zu fordern, daß auch die Zusatzstoffe Flammpunkte von wenigstens 80 °C besitzen, bevorzugt werden allerdings höher liegende Flammpunkte von wenigstens 100 °C und substantiell darüberliegende Werte, beispielsweise solche oberhalb 150 oder 160 °C.

Wichtig ist für die optimale Nutzung der erfindungsgemäßen Zielsetzung weiterhin die Forderung, daß diese Alkohole und/oder Esteröle eine biologisch bzw. ökologisch verträgliche Konstitution aufweisen, d.h. insbesondere frei sind von unerwünscht toxischen Bestandteilen. In der bevorzugten Ausführungsform der Erfindung werden dementsprechend Alkohole und/oder Esteröle mitverwendet, die frei sind von aromatischen Bestandteilen und insbesondere gesättigte und/oder olefinisch ungesättigte, geradkettige und/oder verzweigte Kohlenwasserstoffketten aufweisen. Die Verwendung von cycloaliphatische Strukturbestandteile enthaltenden Komponenten ist aus ökologischen Überlegungen heraus möglich, wird allerdings aus Kostengründen in der Praxis geringere Bedeutung haben.

Carbonsäureester der hier betroffenen Art unterliegen als hochdisperse Ölphase in einer geschlossenen wäßrigen Phase in beschränktem Ausmaß der hydrolytischen Esterspaltung unter Freisetzung der Ester-bildenden Bestandteile Carbonsäure und Alkohol. Für die Gebrauchseigenschaften der Esteröle im erfindungsgemäßen Sinne sind hier zwei Gesichtspunkte zu berücksichtigen, die in einem beschränkten inneren Sachzusammenhang stehen, nämlich Überlegungen zur möglichen Inhalationstoxizität freigesetzter Komponenten, insbesondere der Alkoholkomponenten sowie die Veränderung in der Zusammensetzung der Emulsionsspülung und damit verbundene mögliche Veränderung ihrer Gebrauchseigenschaften.

Zum Verständnis der erfindungsgemäßen Lehre sollen diese Überlegungen getrennt für die Ester-bildenden Grundbestandteile - einerseits die Alkohole und andererseits die Carbonsäuren - betrachtet werden.

Als Ester-bildende Alkoholkomponenten eignen sich erfindungsgemäß sowohl einwertige Alkohole als auch mehrwertige Alkohole, wobei auch beliebige Mischungen dieser Typen eingesetzt werden können. Eine weitere Unterscheidung der Alkohole ergibt sich aus der Betrachtung ihres Löslichkeitsverhaltens in Wasser. Die Alkohole können wasserlöslich und/oder wasserunlöslich sein.

In einer ersten Gruppe sind die mehrwertigen Alkohole zu betrachten. Bevorzugt sind hier insbesondere die technisch leicht zugänglichen und Ester geeigneter Rheologie bildenden niederen, mehrfunktionellen Alkohole mit 2 bis 5, vorzugsweise 2 bis 4 Hydroxylgruppen und insbesondere 2 bis 6 C-Atomen.

Charakteristische Vertreter sind das Ethylenglycol, die Propandiole und insbesondere das Glycerin.

Mehrwertige Alkohole der hier betroffenen Art zeichnen sich durch hohe Wasserlöslichkeit und dabei durch so niedere Verdunstungswerte aus, daß Überlegungen zum Ausschluß inhalations-toxischer Gefährdungen üblicherweise ausscheiden.

Mehrwertige niedere Alkohole der hier betroffenen Art können als vollveresterte Ölkomponenten und/oder als Partialester mit anteilsweise freien Hydroxylgruppen zum Einsatz kommen und/oder im praktischen Gebrauch der erfindungsgemäßen Emulsionsspülung gebildet werden. Solange entstehende Partialester den wenigstens weitgehend wasserunlöslichen Charakter der Ölphase beibehalten, findet bezüglich des Öl/Wasser-Verhältnisses in der Emulsionsspülung keine substantielle Änderung statt. Anders wird es erst dann, wenn der Zustand wasserlöslicher Hydrolyseprodukte - insbesondere also der freien niederen mehrwertigen Alkohole - erreicht wird. Die im praktischen Betrieb auftretenden Veränderungen solcher Emulsionsspülungen aus dieser Quelle sind allerdings unbedeutend. Zunächst einmal ist unter den erfindungsgemäßen Arbeitsbedingungen eine vergleichsweise hohe Stabilität der Esterbindung sichergestellt. O/W-Emulsionsspülungen arbeiten bekanntlich üblicherweise im pH-Bereich von etwa neutral bis mäßig alkalisch, beispielsweise im pH-Bereich von etwa 7,2 bis 11 und insbesondere etwa 7,5 bis 10,5, so daß schon aus diesen Überlegungen ein aggressiver hydrolytischer Angriff auf die Esterbindung nicht besteht. Zusätzlich und darüber hinaus gilt vor allem ja aber auch das Folgende:

Im praktischen Gebrauch der Bohrspülung und dem damit verbundenen Vorantreiben der Bohrung in immer tiefere Erdschichten findet ein ständiger Verbrauch der Bohrspülung und insbesondere auch der in der Bohrspülung eingesetzten Ölphase statt. Emulsionsspülungen sind dafür bekannt, - und hier liegt ein wichtiger Wert für ihren Einsatz - daß die emulgierte Ölphase auf Feststoffoberflächen aufzieht und damit sowohl die Abdichtung der Filterschicht auf der Wandung des Bohrschachtes bewirkt als auch die Interaktion zwischen dem erbohrten Gestein und der wäßrigen Phase der Bohrspülung hindert oder gar

7

unterbindet. Dieser fortlaufende Verbrauch an Bohrspülung und insbesondere auch gerade an Ölphase fordert den fortlaufenden Nachschub an Ölspülung. Im praktischen Betrieb stellt sich damit rasch ein Gleichgewichtszustand im Rahmen der Bohrspülung ein, der den kontinuierlichen Betrieb über lange Zeiträume beherrrscht und ermöglicht.

Die zuvor angestellten Überlegungen haben natürlich nur dann im Rahmen der vorliegenden Erfindung eine Bedeutung, wenn nicht unbeträchtliche Mengen der dispersen Ölphase durch mitverwendete Esteröle gebildet werden. Die oleophilen Ether und ihre Abmischung mit Hydrolyse-resistenten Mischungsbestandteilen werden durch solche Zusatzüberlegungen nicht berührt, so daß auch im weitgehenden oder gar vollständigen Verzicht auf Esteröle eine wichtige und bevorzugte Ausführungsform für das erfindungsgemäße Handeln zu sehen ist.

In einigen Gesichtspunkten weiterführende Überlegungen sind bei der Mitverwendung von einwertigen Alkoholen als Ester-bildender Bestandteil der Esteröle anzustellen. Hier sind nur die niederen Glieder dieser Alkohole wasserlöslich bzw. in unbegrenzter Menge wassermischbar. Zusätzlich spielt bei diesen Alkoholen aber auch ihre Flüchtigkeit eine nicht unbeträchtliche Rolle. Im praktischen Betrieb einer Bohrung stellen sich in der umgewälzten Bohrspülung rasch wenigstens mäßig erhöhte Temperaturen ein. so daß die beim Umpumpen zur Bohrkleinentfernung freigelegten Anteile beispielsweise eine Temperatur im Bereich von 50 bis 70 °C aufweisen. Hier sind dann inhalations-toxikologische Überlegungen anzustellen. Schon $C_4$-Alkohole, beispielsweise Isobutylalkohol kann unter den Arbeitsbedingungen auf der Bohrplattform so flüchtig sein, daß eine mögliche Gefährdung der Mannschaft zu berücksichtigen sein wird. Erfindungsgemäß wird dementsprechend beim Einsatz von Esterölen unter Mitverwendung einwertiger Alkohole bevorzugt als untere Kohlenstoffgrenze für diese einwertigen Alkohole die Zahl 6 gewählt werden, wobei das Arbeiten mit Estern monofunktioneller Alkohole mit wenigstens 8 C-Atomen besonders bevorzugt sein kann.

Die Auswahl und Einschränkung der Kohlenstoffzahl im Ester-bildenden Alkohol führt dann allerdings gleichzeitig bezüglich der Zusammensetzung der Esterölphase unter Berücksichtigung einer partiellen Hydrolyse im Betrieb zum folgenden Ergebnis: Die hydrolysierenden Anteile solcher Esteröle wandeln sich zum freien Alkohol um, der als praktisch wasserunlöslicher Mischungsbestandteil in der dispersen Esterölphase verbleibt.

Auch zu den durch Partialhydrolyse mitverwandter Esteröle gebildeten Carbonsäuren bedarf es einer Reihe von Überlegungen.

Hier können in Abhängigkeit von der speziellen Konstitution der eingesetzten Carbonsäuren zwei grundsätzliche Typen - mit fließendem Übergang - unterschieden werden: Carbonsäuren, die zu Carbonsäuresalzen mit Emulgatorwirkung führen sowie Inertsalze.

Entscheidend ist hier insbesondere die jeweilige Kettenlänge des freiwerdenden Carbonsäuremoleküls. Zu berücksichtigen ist weiterhin das gewöhnlich über die Alkalireserve der Bohrspülung vorliegende salzbildende Kation.

Allgemein gelten hier die folgenden Regeln: Niedere Carbonsäuren, beispielsweise solche mit 1 bis 5 C-Atomen führen zu der Bildung von Inertsalzen, beispielsweise zur Bildung entsprechender Acetate oder Propionate. Fettsäuren höherer Kettenlänge und insbesondere solche des Bereichs von $C_{12-24}$ führen zu Verbindungen mit Emulgator-Wirkung.

Durch geeignete Wahl der Esteröle - und in gewissem Ausmaß auch der salzbildenden Kationen in der Emulsionsspülung - wird damit die gezielte Steuerung der Sekundärprodukte in der Emulsionsspülung möglich, die wesentlichen Einfluß auf die Beschaffenheit und die Wirkung haben können. Auch hier gilt allerdings wiederum das vorhergesagte: Nicht nur die disperse organische Phase, auch die wäßrige Phase unterliegt im praktischen Betrieb dem fortlaufenden Verbrauch und der Notwendigkeit des Ersatzes. Im stationären Betrieb werden sich also auch bezüglich der hier diskutierten Reaktionsfolgeprodukte auf Basis der Ester-bildenden Carbonsäuren rasch kontrollierbare Gleichgewichtszustände einstellen.

<u>Allgemeine Angaben zur Definition als Mischungskomponente geeigneter Esteröle</u>

Bevorzugt sind im erfindungsgemäßen Sinne als Esteröle die entsprechenden Umsetzungsprodukte von Monocarbonsäuren mit monofunktionellen und/oder polyfunktionellen Alkoholen der angegebenen Art. Die Mitverwendung von mehrwertigen Carbonsäuren ist allerdings nicht ausgeschlossen, insbesondere aus Kostengründen kommt ihnen aber untergeordnete Bedeutung zu.

Die Carbonsäuren können dabei natürlichen und/oder synthetischen Ursprungs sein, sie sind wie bereits angegeben, bevorzugt geradkettig und/oder verzweigt und gegebenenfalls cyclisch, dabei aber nicht aromatisch ausgebildet. Die Ester-bildenden Carbonsäuren können gesättigt und/oder ungesättigt sein, wobei unter ungesättigten Verbindungen hier insbesondere olefinisch ungesättigte Verbindungen zu verstehen sind, die einfach, aber auch mehrfach olefinisch ungesättigt sein können. Olefinisch ungesättigten Komponenten kann zur Einstellung vorgegebener Rheologiewerte besondere Bedeutung zukommen. Bekanntlich sind olefinische längerkettige Verbindungen zur Bildung von Estern niedrigeren Schmelzpunktes geeignet als entsprechende gesättigte Komponenten.

Der bevorzugte Bereich für die Kohlenstoffzahl der Carbonsäuren reicht von 1 bis 36 und insbesondere von 2 bis 36. Aus Gründen der leichten Zugänglichkeit kann eine obere Grenze der Kohlenstoffzahl bei etwa 22 bis 24 liegen. Die Auswahl der jeweiligen Kettenlänge in der Ester-bildenden Carbonsäurekomponente erfolgt - in Abstimmung mit der Natur der eingesetzten Alkoholkomponente(n) - unter Berücksichtigung der zahlreichen Überlegungen auf die bereits eingegangen wurde und nicht etwa nur den Ester und/oder seine Rheologie unmittelbar sondern auch die insbesondere durch partielle Hydrolyse gebildeten Reaktionsfolgeprodukte betreffen.

Geeignete Alkohole sind wie angegeben sowohl monofunktionelle Alkohole - unter Berücksichtigung der aufgezählten Einschränkungen -als auch polyfunktionelle Alkohole, insbesondere niedere polyfunktionelle Alkohole mit 2 bis 6 C-Atomen und mit bevorzugt maximal 4 Hydroxylgruppen.

Auch die Alkoholkomponenten können dabei natürlichen und/oder synthetischen Ursprungs sein, sie sind geradkettig oder verzweigt und insbesondere im Fall der monofunktionellen Alkohole gesättigt und/oder auch olefinisch ungesättigt. Monofunktionelle Alkohole besitzen insbesondere bis zu 36 C-Atomen, vorzugsweise bis zu etwa 24 C-Atome. Alkoholen mit 6 bis 18, insbesondere 7 bis 15 C-Atomen natürlichen und/oder synthetischen Ursprungs kann nur Ausbildung der Esteröle besondere Bedeutung zukommen.

Besonders wichtige Esteröle sind im Sinne des erfindungsgemäßen Handelns umweltverträgliche Esteröle wie sie insbesondere in den genannten älteren Anmeldungen P 38 42 659.5, P 38 42 703.6, P 39 07 391.2 und P 39 07 392.0 (D 8523, D 8524, D 8606 und D 8607) geschildert sind. Zur Vervollständigung der Erfindungsoffenbarung werden im nachfolgenden wesentliche Kenndaten solcher Esteröle bzw. Estergemische kurz zusammengefaßt.

Die disperse Esterölphase enthält dementsprechend Carbonsäureester aus wenigstens einer der nachfolgenden Unterklassen:

a) Ester aus $C_{1-5}$-Monocarbonsäuren und ein- und/oder mehrfunktionellen Alkoholen, wobei Reste aus einwertigen Alkoholen wenigstens 6, bevorzugt wenigstens 8 C-Atome aufweisen und die mehrwertigen Alkohole bevorzugt 2 bis 6 C-Atome im Molekül besitzen,

b) Ester aus Monocarbonsäuren synthetischen und/oder natürlichen Ursprungs mit 6 bis 16 C-Atomen, insbesondere Ester entsprechender aliphatisch·gesättigter Monocarbonsäuren und ein-und/oder mehrfunktionellen Alkoholen der unter a) genannten Art,

c) Ester olefinisch ein- und/oder mehrfach ungesättiger Monocarbonsäuren mit wenigstens 16, insbesondere 16 bis 24 C-Atomen und insbesondere monofunktionellen geradkettigen und/oder verzweigten Alkoholen.

Die zuletzt genannten Ester olefinisch ein- und/oder mehrfach ungesättigter Monocarbonsäuren mit wenigstens 16 C-Atomen (c) sind bevorzugt wenigstens einer der nachfolgenden Unterklassen zuzuordnen:

c1) Ester, die sich zu mehr als 45 Gew.-%, vorzugsweise zu mehr als 55 Gew.-% von zwei- und/oder mehrfach olefinisch ungesättigten $C_{16-24}$-Monocarbonsäuren ableiten,

c2) Ester, die sich zu nicht mehr als 35 Gew.-% von zwei- und mehrfach olefinisch ungesättigen Säuren ableiten und dabei bevorzugt zu wenigstens etwa 60 Gew.-% einfach olefinisch ungesättigt sind.

Ausgangsmaterialien für die Gewinnung zahlreicher in diese Unterklassen fallenden Monocarbonsäuren, insbesondere höherer Kohlenstoffzahl sind pflanzliche und/oder tierische Öle. Genannt seien Kokosöl, Palmkernöl und/oder Babassuöl, insbesondere als Einsatzmaterialien für die Gewinnung von Monocarbonsäuren des überwiegenden Bereichs bis $C_{18}$ und von im wesentlichen gesättigten Komponenten. Pflanzliche Esteröle, insbesondere für olefinisch ein- und gegebenenfalls mehrfach ungesättigte Carbonsäuren des Bereichs von $C_{16-24}$ sind beispielsweise Palmöl, Erdnußöl, Rizinusöl und insbesondere Rüböl. Carbonsäuren tierischen Ursprungs dieser Art sind insbesondere entsprechende Gemische aus Fischölen wie Heringsöl.

Die Lehre der Erfindung umfaßt ausdrücklich auch und gerade die Mitverwendung von Monocarbonsäuretriglyceriden und damit insbesondere auch die Verwendung entsprechender Glyceridöle natürlichen Ursprungs. Dabei ist allerdings das Folgende zu berücksichtigen: Natürliche Öle und Fette fallen üblicherweise in einer beispielsweise mit freien Carbonsäuren oder sonstigen Begleitstoffen so stark verunreinigten Form an, daß ihre unmittelbare Verarbeitung in O/W-Emulsionsspülungen der hier betroffenen Art in der Regel ausscheidet. Werden solche natürlichen Einsatzmaterialien in der handelsüblichen Form Wasserbasierten Bohrspülungen zugesetzt, so tritt nahezu schlagartig ein so starkes Schäumen der in Betrieb befindlichen Bohrspülung auf, daß eine ernsthafte Behinderung bis zur Unbrauchbarkeit der Bohrspülung das Ergebnis ist. Anders kann es dann aussehen, wenn gereinigte und/oder synthetisch gewonnene ausgewählte Triglyceride in der dispersen Ölphase zum Einsatz kommen. Hier kann durchaus auch in diesem Bereich die Lehre der Erfindung verwirklicht werden. Grundsätzlich muß allerdings immer bei solchen Estern höherwertiger Alkohole mit einer nicht unbeträchtlichen Schaumbildungstendenz gerechnet werden. Partialester des Glycerins - die Mono- oder Diglyceride - sind bekanntlich wirkungsvolle Emulgatorkomponenten.

Wie bereits angegeben, eignen sich für die erfindungsgemäßen Zwecke nicht nur vergleichsweise dünnflüssige Esteröle im Sinne der Offenbarung der genannten älteren Anmeldungen der Anmelderin auf dem Gebiet der Invert-Bohrspülungen auf Esteröl-Basis, im Rahmen der O/W-Emulsionsspülungen können insbesondere vergleichsweise zähflüssige Esteröle als Komponenten der dispersen Phase von Vorteil sein. Sie sind beispielsweise wertvolle Hilfsmittel zum Verschluß feinster Poren im Filterkuchen des Bohrschachtes oder aber bei der Inertisierung quellfähigen Gesteins, die Schmierfähigkeit derartiger Esteröle vergleichsweise erhöhter Viskosität auch bei erhöhten Temperaturen im Bohrschacht, insbesondere gerade auch bei abgelenkten Bohrungen ist gegebenenfalls deutlich besser als die vergleichsweise dünnflüssiger Esteröle. Eine Beeinträchtigung der Bohrtechnologie wird durch eine disperse Esterölphase aus vergleichsweie höherviskosen Esterölen nicht ausgelöst, die Rheologie des Gesamtsystems wird durch die geschlossene wäßrige Phase bestimmt. Es kann in diesem Sinne bevorzugt sein, Esteröle als disperse Phase einzusetzten, die eine Brookfield-Viskosität bis etwa 500 000 mPas, vorzugsweise bis etwa 1 Mio. mPas oder auch darüber, beispielsweise bis etwa 2 Mio. mPas besitzen (bestimmt bei Raumtemperatur). Hier liegt eine wichtige Erweiterung gegen die Lehre der genannten älteren Anmeldungen der Anmelderin auf dem Gebiet der Öl-basierten Invert-Bohrspülungen auf Esteröl-Basis.

In einer Ausführungsform der Erfindung kann verzweigtkettigen Komponenten und insbesondere α-verzweigtkettigen Alkoholen und/oder Carbonsäuren besondere Bedeutung zukommen. Verzweigungen dieser Art ist bekanntliche einerseits eine Beeinflussung der Rheologie zueigen, üblicherweise wird der gebildete Ester durch eine solche Kettenverzweigung beweglicher. Darüber hinaus kann sich eine solche alpha-Verzweigung aber auch in Richtung auf eine erhöhte Hydrolysestabilität unter Arbeitsbedingungen auswirken, von der damit erfindungsgemäß Gebrauch gemacht wird.

## Die als mögliche Mischungskomponente geeigneten oleophilen Alkohole

In Betracht kommen hier insbesondere oleophile Alkohole wie sie in der eingangs zitierten älteren Patentanmeldung P 39 11 238.1 (D 8511) der Anmelderin beschrieben sind. In der wichtigsten Ausführungsform handelt es sich dabei um oleophile monofunktionelle Alkohole wie sie im Rahmen der vorliegenden Erfindungsbeschreibung zur Ausbildung der Etheröle geschildert sind. Auf diese Angaben wird verwiesen.

## Die wäßrige Phase

Alle Wassertypen sind zur Herstellung erfindungsgemäßer O/W-Emulsionsspülungen geeignet. Diese können dementsprechend auf Basis Süßwasser als insbesondere auch auf Basis Salzwasser - hier insbesondere Seewasser bei Off-Shore-Bohrungen - aufgebaut sein.

## Additive in der Emulsionsspülung

Grundsätzlich kommen hier alle für vergleichbare Spülungstypen vorgesehene Additve in Betracht, deren Zusatz in üblicher Weise mit einem ganz bestimmt angestrebten Eingenschaftsbild der Bohrspülung verbunden ist. Die Additive können wasserlöslich, öllöslich und/oder Wasser- bzw. Öl-dispergierbar sein.

Klassische Additive wasserbasierter O/W-Emulsionsspülungen können sein: Emulgatoren, Fluid-Loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B. Wasser-quellbare Tone und/oder Salzschichten - und der Wasser-basierten Spülflüssigkeit, Netzmittel zum besseren Aufziehen der emulgierten Ölphase auf Feststoffoberflächen, z.B. zur Verbesserung der Schmierwirkung, aber auch zur Verbesserung des oleophilen Verschlusses freigelegter Gesteinsformation, bzw. Gesteinsflächen, Biocide, beispielsweise zur Hemmung des bakteriellen Befalls solcher O/W-Emulsionen und dergleichen. Im einzelnen ist hier auf den einschlägigen Stand der Technik zu verweisen, wie er beispielsweise in der eingangs zitierten Fachliteratur ausführlich beschrieben wird, siehe hierzu insbesondere Gray und Darley, aao, Kapitel 11, "Drilling Fluid Components". Nur auszugsweise sei dementsprechend im nachfolgenden zitiert:

Feindisperse Zusatzstoffe zur Erhöhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität die gleichzeitig auch als Fluid-Loss-Additive wirken: In erster Linie ist hier Bentonit zu nennen, der in Wasser-basierten Spülungen bekanntlich in nicht modifizierter Form eingesetzt wird und damit ökologisch unbedenklich ist. Für Salzwasserspülungen kommt anderen vergleichbaren Tonen, insbesondere Attapulgit und Sepiolith in der Praxis beträchtliche Bedeutung zu.

Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Xanthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation.

Verdünner zur Viskositätsregulierung: Die sogenannten Verdünner können organischer oder anorganischer Natur sein, Beispiele für organische Verdünner sind Tannine und/oder Qebracho-Extrakt. Weitere Beispiele hierfür sind Lignit und Lignitderivate, insbesondere Lignosulfonate. Wie zuvor allerdings angegeben, wird in einer bevorzugten Ausführungsform der Erfindung auf die Mitverwendung toxischer Komponenten gerade hier verzichtet, wobei hier in erster Linie die entsprechenden Salze mit toxischen Schwermetallen wie Chrom und/oder Kupfer zu nennen sind. Ein Beispiel für anorganische Verdünner sind Polyphosphatverbindungen.

Emulgatoren: Für die erfindungsgemäße Lehre sind hier insbesondere zwei Besonderheiten zu berücksichtigen. Es hat sich gezeigt, daß eine stabile Dispergierung von Ethern, Alkoholen und gegebenenfalls von Esterölen sehr viel leichter möglich sein kann als die entsprechende Dispergierung von reinen Mineralölen wie sie nach dem Stand der Technik eingesetzt werden. Hier liegt bereits eine erste Erleichterung. Weiterhin ist zu berücksichtigen, daß durch eine Partialverseifung der Esteröle unter Mitwirkung geeigneter Alkalireserven beim Einsatz längerkettiger Carbonsäureester wirkungsvolle O/W-Emulgatoren nachgebildet werden und damit zur Stabilisierung des Systems beitragen.

Den unerwünschten Wasseraustausch mit beispielsweise Tonen inhibierende Zusatzstoffe: In Betracht kommen hier die aus dem Stand der Technik zu wasserbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann. Verwiesen sei beispielsweise auf die entsprechenden Veröffentlichungen in "Petroleum Engineer International", September 1987, 32 - 40 und "World Oil", November 1983, 93 - 97.

Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen.

Auf dem Gebiet der organischen Basen ist begrifflich zu unterscheiden zwischen wasserlöslichen organischen Basen - beispielsweise Verbindungen vom Typ des Diethanolamins - und praktisch wasserunlöslichen Basen ausgeprägt oleophilen Charakters wie sie in der eingangs zitierten älteren Anmeldung der Anmelderin P 39 03 785.1 (D 8543) als Additiv in Invert-Bohrspülschlämmen auf Esteröl-Basis geschildert sind. Gerade die Mitverwendung auch solcher öllöslichen Basen im Rahmen der vorliegenden Erfindung fällt in die neue Lehre. Oleophile Basen dieser Art, die sich insbesondere durch wenigstens einen längeren Kohlenwasserstoffrest mit beispielsweise 8 bis 36 C-Atomen auszeichnen, sind dann allerdings nicht in der wäßrigen Phase sondern in der dispersen Ölphase gelöst. Hier kommt diesen basischen Komponenten mehrfache Bedeutung zu. Einerseits können sie unmittelbar als Alkalireserve wirken. Zum anderen verleihen sie dem dispergierten Öltröpfchen einen gewissen positiven Ladungszustand und führen damit zu erhöhter Interaktion mit negativen Flächenladungen wie sie insbesondere bei hydrophilen und zum Ionenaustausch befähigten Tonen anzutreffen sind. Erfindungsgemäß kann damit Einfluß auf die hydrolytische Spaltung und den oleophilen Verschluß wasserreaktiver Gesteinsschichten genommen werden.

Die Menge der jeweils eingesetzten Hilfs- und Zusatzstoffe bewegt sich grundsätzlich im üblichen Rahmen und kann damit der zitierten einschlägigen Literatur entnommen werden.


Beispiele

Zunächst wird unter Einsatz von handelsüblichem Bentonit (nicht hydrophobiert) mit Leitungswasser unter Einstellung eines pH-Wertes von 9,2 bis 9,3 mittels Natronlauge eine 6 Gew.-%ige homogenisierte Bentonitaufschlämmung hergestellt.

Ausgehend von dieser vorgequollenen wäßrigen Bentonit-Phase werden in aufeinanderfolgenden Verfahrensschritten - jeweils unter intensiver Durchmischung - die einzelnen Komponenten der Wasserbasierten Emulsion gemäß der nachfolgenden Rezeptur eingearbeitet:

350 g 6 Gew.-%ige Bentonitlösung

1,5 g technische Carboxymethylcellulose niedrigviskos (Relatin U 300 S9)

35 g Natriumchlorid

70 g Ether (gemäß der im nachfolgenden gegebenen Definition)

1,7 g Emulgator (sulf. Ricinusöl "Türkischrot-Öl")

219 g Baryt

An den so hergestellten O/W-Emulsionsspülungen werden Viskositätsbestimmungen wie folgt durchgeführt:

Zunächst wird an der Emulsionsspülung bei 50 °C am ungealterten Material die plastische Viskosität (PV), die Fließgrenze (YP) sowie die Gelstärke nach 10 sec und nach 10 min bestimmt.

Anschließend wird die Emulsionsspülung 16 h bei 125 °C im Autoklaven im sogenannten "Roller-Oven" gealtert, um den Temperatureinfluß auf die Emulsionsstabilität zu überprüfen. Danach werden erneut die Viskositätswerte bei 50 °C bestimmt. In den nachfolgenden Beispielen sind jeweils die Natur des eingesetzten Ethers, die am ungealterten und am gealterten Material bestimmten Werte und -falls erforderlich - allgemeine Bemerkungen zusammengefaßt.

Beispiel 1

| Eingesetzte Ölphase: n-$C_{10}$-Dialkylether | | |
|---|---|---|
| | ungealtertes Material | gealtertes Material |
| Plastische Viskosität [mPa•s] Fließgrenze [Pa] | 10 15,3 | 13 9,6 |
| Gelstärke [Pa] | | |
| 10 sec 10 min | 10,5 11,5 | 6,7 9,1 |

Beispiel 2

Der Ansatz des Beispiels 1 wird wiederholt, jedoch wird auf die Mitverwendung des Emulgators (Türkischrot-Öl) verzichtet.

Die am ungealterten und gealterten Material gemessenen Viskositätswerte sind die folgenden:

| | ungealtertes Material | gealtertes Material |
|---|---|---|
| Plastische Viskosität [mPa•s] Fließgrenze [Pa] | 8 16,2 | 7 17,7 |
| Gelstärke [Pa] | | |
| 10 sec 10 min | 17,2 16,8 | 18,2 13,4 |

Schon im Frischansatz ist eine leichte Tröpfchenbildung an der Oberfläche festzustellen.

Beispiel 3

Eingesetzte Ölphase: Di-isotridecylether

Die an der ungealterten und der gealterten Bohrspülung gemessenen Viskositätswerte sind die folgenden:

|  | ungealtertes Material | gealtertes Material |
|---|---|---|
| Plastische Viskosität [mPa·s] Fließgrenze [Pa] | 15 11,5 | 15 14,4 |
| Gelstärke [Pa] | | |
| 10 sec 10 min | 11,0 16,8 | 13,4 12,5 |

Beispiele 4 und 5 (Vergleichsbeispiele)

Zum Vergleich mit den erfindungsgemäßen Emulsionsspülungen auf Etherbasis werden nach der eingangs gegebenen Rezeptur Emulsionsspülungen - einmal mit und einmal ohne den Emulgator Türkischrot-Öl - auf Basis eines reinen Kohlenwasserstofföls angesetzt und ausgetestet. Als Kohlenwasserstofföl wird das Handelsprodukt "WP83HF" verwendet, das in der heutigen Praxis der Bohrspülungen in weitem Umfang eingesetzt wird.

Die Wertetabelle des Beispiels 4 bezieht sich auf die Emulgator enthaltende Emulsions-Spülflüssigkeit, die Wertetabelle des Beispiels 5 beschreibt das ohne Mitverwendung von Emulgator eingesetzte Produkt.

| Beispiel 4: | | |
|---|---|---|
|  | ungealtertes Material | gealtertes Material |
| Plastische Viskosität [mPa·s] Fließgrenze [Pa] | 10 16,3 | 10 9,1 |
| Gelstärke [Pa] | | |
| 10 sec 10 min | 10,1 11,9 | 4,8 8,6 |

| Beispiel 5: | | |
|---|---|---|
|  | ungealtertes Material | gealtertes Material |
| Plastische Viskosität [mPa·s] Fließgrenze [Pa] | 9 16,8 | 8 17,7 |
| Gelstärke [Pa] | | |
| 10 sec 10 min | 16,8 28,7 | 17,2 14,8 |

## Ansprüche

1. Verwendung von wenigstens weitgehend wasserunlöslichen, bei Arbeitstemperatur flüssigen und/oder wenigstens plastisch verformbaren und Flammpunkte von wenigstens 80 °C aufweisenden Ethern ein- und/oder mehrfunktioneller Alkohole natürlichen und/oder synthetischen Ursprungs oder entsprechenden Lösungen solcher Ether in ökologisch verträglichen wasserunlöslichen Ölen als disperse Ölphase von Wasser-basierten O/W-Emulsions-Bohrspülungen, die für eine umweltschonende Erschließung geologischer Formationen geeignet sind und dabei gewünschtenfalls unlösliche, feinteilige Beschwerungsmittel zur Ausbildung von Wasser-basierten O/W-Emulsionsbohrschlämmen und/oder weitere Zusatzstoffe wie Emulgatoren, Fluid-Loss-Additive, Netzmittel, Alkalireserven und/oder Hilfsstoffe zur Inhibierung erbohrten Gesteins erhöhter Wasserempfindlichkeit enthalten.

2. Ausführungsform nach Anspruch 1, dadurch gekennzeichnet, daß die disperse Ether-Ölphase in Mengen von wenigstens etwa 5 Gew.-% , vorzugsweise von wenigstens etwa 8 Gew.-% in der O/W-Spülung eingesetzt wird - Gew.-% bezogen auf die Summe der unbeschwerten Flüssiganteile Ether-Öl/Wasser - und dabei vorzugsweise nicht mehr als etwa 50 Gew.%, insbesondere nicht mehr als etwa 40 Gew.-% -Gew.-% wie zuvor berechnet - ausmacht.

3. Ausführungsform nach Ansprüchen 1 und 2, dadurch gekennzeichnet, daß die wasserunlöslichen Ether einen wenigstens substantiellen Anteil der geschlossenen Ölphase ausmachen und dabei diese zu mehr als 10 Gew.-%, vorzugsweise zu mehr als 50 Gew.-% und insbesondere zum wenigstens weitaus überwiegenden Anteil bilden.

4. Ausführungsform nach Ansprüchen 1 bis 3, dadurch gekennzeichnet, daß Ether oleophiler Beschaffenheit von mono- und/oder difunktionellen Alkoholen, insbesondere von monofunktionellen Alkoholen eingesetzt werden.

5. Ausführungsform nach Ansprüchen 1 bis 4, dadurch gekennzeichnet, daß Ether verwendet werden, die frei von aromatischen Molekülbestandteilen sind und sich vorzugsweise von geraden und/oder verzweigten Kohlenwasserstoffketten ableiten, die auch olefinisch ungesättigt sein können.

6. Ausführungsform nach Ansprüchen 1 bis 5, dadurch gekennzeichnet, daß Ether monofunktioneller Alkohole mit wenigstens 4 C-Atomen, vorzugsweise mit wenigstens 6 bis 8 C-Atomen verwendet werden, die geradkettig und/oder verzweigtkettig und gewünschtenfalls wenigstens anteilsweise olefinisch ungesättigt sind und insbesondere bis zu 36 C-Atome aufweisen.

7. Ausführungsform nach Ansprüchen 1 bis 6, dadurch gekennzeichnet, daß Ether, Mischether und/oder Ethergemische von monofunktionellen Alkoholen mit bis zu 24 C-Atomen mitverwendet werden.

8. Ausführungsform nach Ansprüchen 1 bis 7, dadurch gekennzeichnet, daß wenigstens anteilsweise wasserunlösliche Polyalkylenglycol-(Misch)-Ether von insbesondere niederen Alkylenglycolen, z.B. entsprechende Mischether von Ethylenoxid und/oder Propylenoxid mit Alkoholen mit wenigstens 4 C-Atomen in der geschlossenen Ölphase eingesetzt werden.

9. Ausführungsform nach Ansprüchen 1 bis 8, dadurch gekennzeichnet, daß zur Abmischung mit den wasserunlöslichen Ethern als ökologisch verträgliche, wasserunlösliche Öle wenigstens anteilsweise oleophile Alkohole und/oder Esteröle verwendet werden, deren Ester-bildenden Alkoholkomponenten sich von mono- und/oder mehrfunktionellen Alkoholen ableiten und dabei die Alkohole vorzugsweise so ausgewählt sind, daß auch im praktischen Einsatz unter partieller Esterverseifung keine toxikologischen, insbesondere keine inhalations-toxikologischen Gefährdungen ausgelöst werden.

10. Ausführungsform nach Ansprüchen 1 bis 9, dadurch gekennzeichnet, daß als mitverwendete Esteröle Ester von monofunktionellen Alkoholen natürlichen und/oder synthetischen Ursprungs und ausgeprägt oleophilen Charakters mit vorzugsweise wenigstens 6, insbesondere wenigstens 8 C-Atomen verwendet werden.

11. Ausführungsform nach Ansprüchen 1 bis 10, dadurch gekennzeichnet, daß bei Mitverwendung von Esterölen auf Basis mehrfunktioneller Alkohole Voll- und/oder Partialester insbesondere niederer Alkohole mit bis zu 4 OH-Gruppen im Molekül verwendet werden, die auch als Partialether vorliegen können, wobei entsprechende Mischungskomponenten auf Basis wasserlöslicher Polyole, insbesondere auf Basis von Ethylenglycol, Propylenglycol und/oder Glycerin bevorzugt sein können.

12. Ausführungsform nach Ansprüchen 1 bis 11, dadurch gekennzeichnet, daß oleophile Ether oder deren Abmischungen mit Alkoholen und/oder Esterölen eingesetzt werden, die Erstarrungswerte (Fließ-und Stockpunkt) unterhalb 0 °C, vorzugsweise unterhalb -5 °C und dabei Flammpunkte von wenigstens 100 °C aufweisen.

13. Ausführungsform nach Ansprüchen 1 bis 12, dadurch gekennzeichnet, daß als disperse Ölphase Ether oder deren Abmischungen mit ökologisch verträglichen Ölen verwendet werden, die als geschlossene Ölphase bei 20 °C eine Brookfield-RVT-Viskosität bis etwa 2 Mio. mPas, vorzugsweise bis etwa 1 Mio.

EP 0 399 270 A1

mPas aufweisen.

14. Ausführungsform nach Ansprüchen 1 bis 13, dadurch gekennzeichnet, daß die disperse Ölphase Ether in Abmischung mit Carbonsäureestern aus wenigstens einer der nachfolgenden Unterklassen enthält:

a) Ester aus $C_{1-5}$-Monocarbonsäuren und ein- und/oder mehrfunktionellen Alkoholen, wobei Reste aus einwertigen Alkoholen wenigstens 6, bevorzugt wenigstens 8 C-Atome aufweisen und die mehrwertigen Alkohole bevorzugt 2 bis 6 C-Atome im Molekül besitzen,

b) Ester aus Monocarbonsäuren synthetischen und/oder natürlichen Ursprungs mit 6 bis 16 C-Atomen, insbesondere Ester entsprechender aliphatisch gesättigter Monocarbonsäuren und ein-und/oder mehrfunktionellen Alkoholen der unter a) genannten Art,

c) Ester olefinisch ein- und/oder mehrfach ungesättiger Monocarbonsäuren mit wenigstens 16, insbesondere 16 bis 24 C-Atomen und insbesondere monofunktionellen geradkettigen und/oder verzweigten Alkoholen.

15. Ausführungsform nach Ansprüchen 1 bis 14, dadurch gekennzeichnet, daß in der dispersen Phase vorliegende Esteröle gemäß Anspruch 14, c) wenigstens einer der nachfolgenden Unterklassen zuzuordnen sind:

c1) Ester, die sich zu mehr als 45 Gew.-%, vorzugsweise zu mehr als 55 Gew.-% von zwei- und/oder mehrfach olefinisch ungesättigten $C_{16-24}$-Monocarbonsäuren ableiten,

c2) Ester, die sich zu nicht mehr als 35 Gew.-% von zwei- und mehrfach olefinisch ungesätigen Säuren ableiten und dabei bevorzugt zu wenigstens etwa 60 Gew.-% einfach olefinisch ungesättigt sind.

16. Ausführungsform nach Ansprüchen 1 bis 15, dadurch gekennzeichnet, daß in der dispersen Ölphase basische Aminverbindungen ausgeprägt oelophilen Charakters und höchstens beschränkter Wasserlöslichkeit als Additiv mitverwendet werden.

17. Ausführungsform nach Ansprüchen 1 bis 16, dadurch gekennzeichnet, daß oleophile Aminverbindungen mitverwendet werden, die wenigstens überwiegend von aromatischen Bestandteilen frei sind und deren Wasserlöslichkeit bei Raumtemperatur nicht mehr als etwa 1 Gew.-% beträgt.

18. Ausführungsform nach Ansprüchen 1 bis 17, dadurch gekennzeichnet, daß mit basischen Aminverbindungen als Zusatz gearbeitet wird, die wenigstens einen langkettigen Kohlenwasserstoffrest mit bevorzugt 8 bis 36 C-Atomen aufweisen.

19. Ausführungsform nach Ansprüchen 1 bis 18. dadurch gekennzeichnet, daß mit einer dispersen Ölphase gearbeitet wird, deren Gehalt an oleophilen Aminverbindungen bis zu 10 Gew.-% beträgt und vorzugsweise im Bereich von etwa 0,1 bis 2 Gew.-% - jeweils bezogen auf Ölphase - liegt.

20. Ausführungsform nach Ansprüchen 1 bis 19, dadurch gekennzeichnet, daß als homogene wäßrige Phase Süßwasser oder gelöste bzw. suspendierte Salze, insbesondere Halogenide und/oder Carbonate der Alkali- und/oder Erdalkalimetalle enthaltendes Wasser eingesetzt wird, das auch gewünschtenfalls modifiziertes Seewasser sein kann.

21. Ausführungsform nach Ansprüchen 1 bis 20, dadurch gekennzeichnet, daß anorganische und/oder organische Hilfs- und Zuschlagsstoffe für Wasser-basierte Emulsions-Bohrspülungen bzw. Emulsions-Bohrschlämme mitverwendet werden, die ökologisch und toxikologisch wenigstens weitgehend unbedenklich, beispielsweise frei von löslichen toxischen Schwermetallverbindungen sind.

22. Ausführungsform nach Ansprüchen 1 bis 21, dadurch gekennzeichnet, daß die dispergierte Etherphase zusammen mit bekannten anorganischen und/oder organischen Hilfsstoffen zur Einschränkung der Gesteinshydratation hierzu disponierter mineralischer Schichten verwendet wird.

23. Wasserbasierte O/W-Emulsions-Bohrspülflüssigkeiten, die in einer homogenen wäßrigen Phase eine stabil-disperse Ölphase in Mengen von etwa 5 bis 50 Gew.-% - Gew.-% bezogen auf die Summe der unbeschwerten Wasser- und Ölphase - gewünschtenfalls zusammen mit gelösten und/oder dispergierten Hilfsstoffen wie Emulgatoren, Fluid-Loss-Additiven, Netzmitteln, feinteiligen Beschwerungsstoffen, Salzen, Alkalireserven und/oder Biociden enthalten, dadurch gekennzeichnet, daß ein wenigstens substantieller Anteil der dispersen Ölphase durch wasserdispergierbare, bei Arbeitstemperatur flüssige oder wenigstens plastisch verformbare und Flammpunkte von wenigstens 80 °C aufweisende Ether von ein- und/oder mehrfunktionellen Alkoholen natürlichen und/oder synthetischen Ursprungs oder durch entsprechende Lösungen solcher Ether in ökologisch verträglichen, wasserunlöslichen Ölen, insbesondere oleophilen Alkoholen und/oder entsprechenen Esterölen gebildet ist.

24. Emulsionsbohrspülflüssigkeiten nach Anspruch 23, dadurch gekennzeichnet, daß die disperse Ölphase wenigstens etwa 8 Gew.-% und vorzugsweise nicht mehr als etwa 40 Gew.-% ausmacht, wobei Anteile der emulgierten Ölphase im Bereich von etwa 10 bis 35 Gew.-% bevorzugt sind.

25. Emulsionsbohrspülflüssigkeiten nach Ansprüchen 23 und 24, dadurch gekennzeichnet, daß die Ether und die gegebenenfalls vorliegenden oleophilen Alkohole und/oder Esteröle frei sind von ökologisch bedenklichen, insbesondere aromatischen Bestandteilen.

15

26. Emulsionsbohrspülflüssikgeiten nach Ansprüchen 23 bis 25, dadurch gekennzeichnet, daß zusammen mit den Ethern als ökologisch verträgliche Öle Esteröle aus wenigstens überwiegenden Anteilen von Monocarbonsäuren und ein- und/oder mehrwertigen Alkoholen vorliegen, die vorzugsweise wenigstens anteilig einer der nachfolgenden Klassen zuzuordnen sind:

a) Ester aus $C_{1-5}$-Monocarbonsäuren und ein- und/oder mehrfunktionellen Alkoholen, wobei Reste aus einwertigen Alkoholen wenigstens 6, bevorzugt wenigstens 8 C-Atome aufweisen und die mehrwertigen Alkohole bevorzugt 2 bis 6 C-Atome im Molekül besitzen,

b) Ester aus Monocarbonsäuren synthetischen und/oder natürlichen Ursprungs mit 6 bis 16 C-Atomen, insbesondere Ester entsprechender aliphatisch gesättigter Monocarbonsäuren und ein- und/oder mehrfunktionellen Alkoholen der unter a) genannten Art,

c) Ester olefinisch ein- und/oder mehrfach ungesättiger Monocarbonsäuren mit wenigstens 16, insbesondere 16 bis 24 C-Atomen und insbesondere monofunktionellen geradkettigen und/oder verzweigten Alkoholen.

27. Emulsionsbohrspülflüssigkeiten nach Ansprüchen 23 bis 26, dadurch gekennzeichnet, daß beim Vorliegen von Esterölen der Unterklasse c) diese wenigstens anteilig einer der nachfolgenden Unterklassen zuzuordnen sind:

c1) Ester, die sich zu mehr als 45 Gew.-%, vorzugsweise zu mehr als 55 Gew.-% von zwei- und/oder mehrfach olefinisch ungesättigten $C_{16-24}$-Monocarbonsäuren ableiten.

c2) Ester, die sich zu nicht mehr als 35 Gew.-% von zwei- und mehrfach olefinisch ungesättigen Säuren ableiten und dabei bevorzugt zu wenigstens etwa 60 Gew.-% einfach olefinisch ungesättigt sind.

28. Emulsionsbohrspülflüssigkeiten nach Ansprüchen 23 bis 27, dadurch gekennzeichnet, daß zusammen mit freien Alkoholen Esteröle auf Basis monofunktioneller, praktisch wasserunlöslicher Alkohole mit ausgeprägt oleophilem Charakter als Mischungskomponente in der Ölphase vorliegen, die gleich oder verschieden von dem in Form freier Alkohole vorliegenden Bestandteil der dispersen Ölphase sind.

29. Emulsionsbohrspülflüssigkeiten nach Ansprüchen 23 bis 28, dadurch gekennzeichnet, daß die im Esteröl vorliegenden Bestandteile monofunktioneller Alkohole so ausgewählt sind, daß bei einer im Gebrauch partiell auftretenden Esterhydrolyse im praktischen Betrieb inhalations-toxikologisch unbedenkliche Alkohole gebildet werden.

30. Emulsionsbohrspülflüssigkeiten nach Ansprüchen 23 bis 29, dadurch gekennzeichnet, daß in der dispersen Ether-Ölphase basische Aminverbindungen ausgeprägt oleophilen Charakters und höchstens beschränkter Wasserlöslichkeit mitverwendet werden, die von aromatischen Bestandteilen frei sind und vorzugsweise wenigstens einen langkettigen Kohlenwasserstoffrest mit bevorzugt 8 bis 36 C-Atomen aufweisen.

31. Emulsionsbohrspülflüssigkeiten nach Ansprüchen 23 bis 30, dadurch gekennzeichnet, daß auch die üblichen Hilfs- und Zuschlagsstoffe Wasser-basierter Emulsions-Bohrspülflüssigkeiten unter dem Kriterium ökologischer Verträglichkeit ausgewählt und insbesondere frei von toxischen Schwermetallverbindungen sind.

32. Emulsionsbohrspülflüssikgeiten nach Ansprüchen 23 bis 31, dadurch gekennzeichnet, daß sie Zuschlagsstoffe zur Inhibierung der Wasseraufnahme quellfähiger Gesteinsschichten bzw. Tone enthalten.

33. Emulsionsbohrspülflüssikgeiten nach Ansprüchen 23 bis 32, dadurch gekennzeichnet, daß sie auf einen pH-Wert im Bereich von etwa neutral bis mäßig-basisch, insbesondere auf den Bereich von etwa 7,5 bis 11 eingestellt sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 271 943 (SHELL)<br>* Seite 3, Zeilen 3-52; Seite 4, Zeilen 28-51 *<br>--- | 1,16-18,20,21 | C 09 K 7/02 |
| Y | US-A-4 631 136 (R.W. JONES)<br>* Spalte 3, Zeilen 32-68; Spalte 4, Zeilen 1-54; Spalte 5, Zeilen 41-68 *<br>--- | 1,16-18,20,21 | |
| Y | US-A-3 630 898 (F.C. TEETER)<br>* Spalte 2, Zeilen 19-35; Spalte 3, Zeilen 1-35,44-50 *<br>--- | 1,4-11,16-18 | |
| Y | FR-A-1 297 556 (CHEM. WERKE HÜLS)<br>* Seite 1, rechte Spalte, Zeilen 16-36; Seite 2, linke Spalte, Zeilen 23-37, recht Spalte, Zeilen 20-38 *<br>--- | 1,4-11,16-18 | |
| Y | DE-B-1 218 096 (CHEM. WERKE HÜLS)<br>* Spalte 1, Zeilen 1-52; Spalte 2, Zeilen 1-4; Spalte 3, Zeilen 12-26 *<br>----- | 1,4,5,8,16 | **RECHERCHIERTE SACHGEBIETE (Int. Cl.5)**<br><br>C 09 K 7<br>C 10 M 173/02<br>C 10 M 101/04<br>C 10 M 105/32 |

Der vorliegende Recherchenbericht wurde für alle Patentansprüche erstellt

| Recherchenort | Abschlußdatum der Recherche | Prüfer |
|---|---|---|
| DEN HAAG | 03-07-1990 | BOULON A.F.J. |